# EUROPEAN PATENT APPLICATION

(11) **EP 2 610 059 A1**
(43) Date of publication of application: **03.07.2013**
(21) Application number: 11819899.3
(22) Date of filing: 22.08.2011
(51) Int. Cl.: B32B 27/30

(54) **SYNTHETIC RESIN LAMINATE**

(30) Priority: 26.08.2010 JP 2010189721
(71) Applicant: Mitsubishi Gas Chemical Company, Inc., Tokyo 100-8324 (JP)
(72) Inventor: SATO, Kazuya, Hiratsuka-shi Kanagawa 254-0016 (JP); MURAI, Katsuyuki, Hiratsuka-shi Kanagawa 254-0016 (JP); KOIKE, Nobuyuki, Hiratsuka-shi Kanagawa 254-0016 (JP); OGURO, Hiroki, Hiratsuka-shi Kanagawa 254-0016 (JP)
(74) Representative: Vossius & Partner
(86) International application number: PCT/JP2011/068897
(87) International publication number: WO 2012/026436

(57) **Abstract**

The invention provides a synthetic resin laminate having a thermoplastic resin (A) layer and a thermoplastic resin (B) layer provided on each side of the thermoplastic resin (A) layer, the thermoplastic resin (A) having a styrene structural unit content of 65 to 90 mol% with respect to all the structural units forming the resin, characterized in that the thermoplastic resin (B) is a (meth)acrylic acid ester-styrene copolymer resin which is predominantly formed of a (meth)acrylic acid ester structural unit (a) represented by formula (1) and a styrene structural unit, and which has a ratio by mole of (meth)acrylic acid ester structural unit (a) to styrene structural unit of 70 : 30 to 84 : 16. The synthetic resin laminate is excellent in transparency, anti-warpage property, interlayer adhesion, adhesion to a hard coat layer formed from a photosensitive hard coating material, scratch resistance, and weather resistance.

## Description

### Technical Field

The present invention relates to a synthetic resin laminate and, more particularly, to a synthetic resin laminate which is used as a material for a transparent substrate or a transparent protective material and which is excellent in transparency, anti-warpage property, interlayer adhesion, adhesion to a hard coat layer formed of a photosensitive hard coating material, scratch resistance, and weather resistance.

### Background Art

Transparent resin plates find various uses, such as sound-proof partition walls, carports, signboards, and display front plates of display devices of OA equipment and portable electronic equipment. In recent years, a front panel of a portable display device such as a mobile phone, a portable electronic game console, or a PDA requires weather resistance for outdoor use, and scratch resistance for prevention of scratch upon conveyance, in addition to transparency and visibility. In many cases, in order to ehnacne scratch resistance, front panels made of resin are generally coated with a hard coat layer formed through applying a photosensitive acrylic hard coating material on front surfaces of the panels. In such cases, adhesion between the panel and the hard coat layer must be ensured.

Such resins for forming the front panels are generally formed from a methacrylic resin, which is excellent in transparency, weather resistance, scratch resistance, and adhesion to a hard coat layer made from a photosensitive acrylic hard coating material. However, methacrylic resin has high percent water absorption, and use thereof often results in warpage of a front panel due to variation in humidity in operational conditions and difference in humidity between the interior of the device and the outside, which is problematic.

There has been known a hard coat plate for solving the problematic warpage (Patent Document 1), which has a methacrylic resin surface and a plastic sheet intermediate layer made of methyl methacrylate-styrene copolymer resin. However, the plastic sheet disclosed in Patent Document 1 is warped in some cases depending on the operational conditions. In addition, depending on the composition of the methyl methacrylate-styrene copolymer resin, adhesion to the methacrylic resin layer may be poor.

Meanwhile, in a conventional lens sheet which has a Fresnel lens shape and which is incorporated into a rear-projection television, a plastic sheet therefor produced from an intermediate layer formed of a low-water-absorption resin is employed for maintaining adhesion to photo-cured resin and for reducing warpage due to variation in humidity, and a surface layer formed of a highly polar, high-water-absorption resin (Patent Document 2). However, the plastic sheet disclosed in Patent Document 2 is designed to maximize stability in Fresnel lens shape and adhesion to the substrate. Therefore, adhesion of the plastic sheet is satisfactory to a photo-cured resin formed from a monomer or an oligomer having fewer functional groups, but is sometimes unsatisfactory to a hard coat layer obtained from a photo-sensitive acrylic hard coating material formed from a monomer or an oligomer having relatively a large number of functional groups for elevating cross-linking density and imparting scratch resistance thereto.

Furthermore, the plastic sheet disclosed in Patent Document 2 may undergo surface deterioration after the weather resistance test, thereby reducing adhesion to the photo-cured resin. The problem is not fatal when the plastic sheet serves as a Fresnel lens sheet incorporated into a rear-projection television mainly for indoor use, but is somewhat fatal when it serves as a front panel of a portable electronic apparatus, which is generally for outdoor use.

### Prior Art Documents

### Patent Documents

Patent Document 1: Japanese Patent Application Laid-Open (*kokai*) No. 2010-66744
Patent Document 2: Japanese Patent Application Laid-Open (*kokai*) No. 2005-300957

### Summary of the Invention

### Problems to be Solved by the Invention

The present invention is directed to a synthetic resin laminate. An object of the invention is to provide a synthetic resin laminate which is used as a transparent substrate material or a transparent protective material and which is excellent in transparency, anti-warpage property, interlayer adhesion, adhesion to a hard coat layer formed from a photosensitive hard coating material, scratch resistance, and weather resistance.

### Means for Solving the Problems

The present inventors have conducted extensive studies in order to attain the aforementioned object, and have found that a synthetic resin laminate having the aforementioned properties can be yielded through provision, on each surface of a thermoplastic resin layer having a styrene structural unit content of 65 to 90 mol% with respect to all the structural units, of a (meth)acrylic acid ester-styrene copolymer resin layer produced by copolymerizing (meth)acrylic acid ester monomers and styrene monomers at a specific monomer balance. The present invention has been accomplished on the basis of this finding. As used herein, the term "(meth)acrylic" refers to methacrylic and/or acrylic.
Accordingly, the present invention provides the following synthetic resin laminates.

1. A synthetic resin laminate, comprising a thermoplastic resin (A) layer, and a thermoplastic resin (B) layer provided on each side of the thermoplastic resin (A) layer, the thermoplastic resin (A) having a styrene structural unit content of 65 to 90 mol% with respect to all the structural units forming the resin, characterized in that the thermoplastic resin (B) is a (meth)acrylic acid ester-styrene copolymer resin which is predominantly formed of a (meth)acrylic acid ester structural unit (a) represented by formula (1) :

[F1] 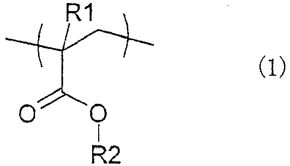 (wherein R1 represents a hydrogen atom or a methyl group, and R2 represents a C1 to C18 alkyl group) and a styrene structural unit, and which has a ratio by mole of (meth)acrylic acid ester structural unit (a) to styrene structural unit of 70 : 30 to 84 : 16.
2. A synthetic resin laminate as described in 1 above, wherein the thermoplastic resin (A) has a styrene structural unit content of 70 to 80 mol%.
3. A synthetic resin laminate as described in 1 above, wherein the thermoplastic resin (B) has a ratio by mole of (meth)acrylic acid ester structural unit (a) to styrene structural unit of 74 : 26 to 80 : 20.
4. A synthetic resin laminate as described in 1 above, wherein the thermoplastic resin (A) is a methyl methacrylate-styrene copolymer resin or an acrylonitrile-styrene copolymer resin.
5. A synthetic resin laminate as described in 1 above, wherein the thermoplastic resin (A) is a methyl methacrylate-styrene copolymer resin having a ratio by mole of methyl methacrylate structural unit to styrene structural unit of 10 : 90 to 35 : 65.
6. A synthetic resin laminate as described in 1 above, wherein the thermoplastic resin (A) is an acrylonitrile-styrene copolymer resin having a ratio by mole of acrylonitrile structural unit to styrene structural unit of 10 : 90 to 35 : 65.
7. A synthetic resin laminate as described in any of 1 to 6 above, wherein one or both sides have been subjected to a hard coating treatment.
8. A synthetic resin laminate as described in any of 1 to 6 above, wherein one or both sides have been subjected to one or more treatments selected from among an anti-reflection treatment, an anti-fouling treatment, an anti-static treatment, a weather-resistant treatment, and an anti-glare treatment.
9. A material for transparent substrate comprising a synthetic resin laminate as recited in any of 1 to 6 above.
10. A transparent protective material comprising a synthetic resin laminate as recited in any of 1 to 6 above.

### Effects of the Invention

The synthetic resin laminate of the present invention is excellent in transparency, anti-warpage property, interlayer adhesion, adhesion to a hard coat layer formed from a photosensitive hard coating material, scratch resistance, and weather resistance, and is used as a material for transparent substrate, a transparency protective material, etc., particularly as a front panel of a display device. Modes for Carrying Out the Invention

The synthetic resin laminate of the present invention comprises a thermoplastic resin (A) layer and a thermoplastic resin (B) layer provided on each side of the thermoplastic resin (A) layer, the thermoplastic resin (A) having a styrene structural unit content of 65 to 90 mol% with respect to all the structural units forming the resin, wherein the thermoplastic resin (B) is a (meth)acrylic acid ester-styrene copolymer resin which is predominantly formed of a (meth)acrylic acid ester structural unit (a) represented by formula (1) :

[F2] 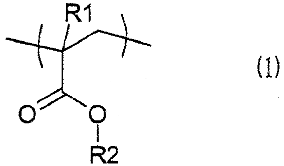 (wherein R1 represents a hydrogen atom or a methyl group, and R2 represents a C1 to C18 alkyl group) and a styrene structural unit, and which has a ratio by mole of (meth)acrylic acid ester structural unit (a) to styrene structural unit of 70 : 30 to 84 : 16.

In the (meth)acrylic acid ester structural unit represented by the formula (1) employed in the present invention, R2 represents a C1 to C18 alkyl group. Examples of the alkyl group include methyl, ethyl, butyl, lauryl, stearyl, cyclohexyl, and isobornyl. These alkyl groups may be used singly or in combination with two or more species. Among such (meth) acrylic acid ester structural units, a (meth)acrylic acid ester structural unit in which R2 is a methyl group and/or an ethyl group is preferred, with a methyl methacrylate structural unit, in which R1 is a methyl group, and R2 is a methyl group, being more preferred.

In the synthetic resin laminate of the present invention, each side of the thermoplastic resin (A) layer must be laminated with the thermoplastic resin (B) layer. When only one side of the thermoplastic resin (A) layer is coated with the thermoplastic resin (B), the laminated product may warp due to the difference in saturation percent water absorption between thermoplastic resin (A) and thermoplastic resin (B) under varied humidity conditions.

The thermoplastic resin (A) employed in the present invention has a styrene structural unit content of 65 to 90 mol% with respect to all the structural units forming the resin. Examples of the thermoplastic resin (A) which may be used in the invention include methyl methacrylate-styrene copolymer resin and acrylonitrile-styrene copolymer resin. No particular limitation is imposed on the thermoplastic resin (A), so long as the thermoplastic resin (A) has a styrene structural unit content of 65 to 90 mol% with respect to all the structural units and ensures interfacial adhesion with the thermoplastic resin (B) to a practically acceptable degree. Examples of preferred thermoplastic resins (A) include a methyl methacrylate-styrene copolymer resin having a ratio by mole of methyl methacrylate structural unit to styrene structural unit of 10 : 90 to 35 : 65, and an acrylonitrile-styrene copolymer resin having a ratio by mole of acrylonitrile structural unit to styrene structural unit of 10 : 90 to 35 : 65.
The styrene structural unit content with respect to all the structural units forming the thermoplastic resin (A) is preferably 70 to 90 mol%, more preferably 70 to 80 mol%. Examples of the resin satisfying the conditions include a methyl methacrylate-styrene copolymer resin having a ratio by mole of methyl methacrylate structural unit to styrene structural unit 10 : 90 to 25 : 75.
When the styrene structural unit content with respect to all the structural units forming the thermoplastic resin (A) is less than 65 mol%, the synthetic resin laminate may undergo in some cases warpage due to variation in humidity. From the viewpoint of warpage, the styrene structural unit content with respect to all the structural units forming the thermoplastic resin (A) is preferably high. However, when the methyl methacrylate-styrene copolymer resin or the acrylonitrile-styrene copolymer resin has a styrene structural unit content with respect to all the structural units is in excess of 90 mol%, the interfacial adhesion to the thermoplastic resin (B) may be poor for use in practice, which is not suited.

The thermoplastic resin (A) may be blended with other resins, so long as the transparency is not impaired, and the styrene structural unit content of the blended composition falls within a range of 65 to 90 mol%. Examples of such additional resins include methyl methacrylate-styrene copolymer resin, polymethyl methacrylate, polystyrene, and polycarbonate.

The thermoplastic resin (B) employed in the present invention is a (meth)acrylic acid ester-styrene copolymer resin predominantly formed of (meth)acrylic acid ester structural units (a) represented by formula (1) and styrene structural units, wherein the ratio of the sum of the (meth)acrylic acid ester structural units (a) and the styrene structural units with respect to all the structural units that form the thermoplastic resin (B) is 90 to 100 mol%, preferably 95 to 100 mol%.
The ratio by mole of (meth)acrylic acid ester structural unit (a) represented by formula (1) to styrene structural unit of the thermoplastic resin (B) is 70 : 30 to 84 : 16, more preferably 70 : 30 to 80 : 20, still more preferably 74 : 26 to 80 : 20, particularly preferably 74 : 26 to 78 : 22.
When the ratio by mole of (meth)acrylic acid ester structural unit (a) to the sum of the (meth)acrylic acid ester structural units (a) and the styrene structural units is less than 70%, adhesion to the hard coat layer formed from a photosensitive hard coating material and scratch resistance may decrease, surface deterioration may occur after the weather resistance test, which is not practical. When the ratio is in excess of 84%, warpage caused by variation in humidity is may be promoted, and adhesion to the thermoplastic resin (A) layer may be poor.

The thermoplastic resin (B) employed in the present invention may be produced by co-polymerizing a (meth)acrylic acid ester monomer, a styrene monomer, etc. Polymerization of (meth)acrylic acid ester monomers and styrene monomers may be performed through a known technique, for example, bulk polymerization or solution polymerization.
In one embodiment of solution polymerization, a monomer composition containing monomers, a chain-transfer-agent, and a polymerization initiator is continuously fed to a complete mixing bath, and polymerization is continuously performed at 100 to 180°C.

Examples of the solvent used in solution polymerization include hydrocarbon solvents such as toluene, xylene, cyclohexane, and methylcyclohexane; ester solvents such as ethyl acetate and methyl isobutyrate; ketone solvents such as acetone and methyl ethyl ketone; ether solvents such as tetrahydrofuran and dioxane; and alcohol solvents such as methanol and isopropanol.

The thermoplastic resin (A) and thermoplastic resin (B) of the present invention may further contain various additives in use. Example of such additives include an antioxidant, a UV-absorber, an anti-coloring agent, an antistatic agent, a release agent, a lubricant, a dye, a pigment, an inorganic filler, and a resin filler. No particular limitation is imposed on the blending method, and examples of the method include compounding all the ingredients, dry blending of a master batch, and dry blending of all ingredients.

The synthetic resin laminate of the present invention may be produced through a method such as co-extrusion.
No particular limitation is imposed on the co-extrusion method, and a known method may be employed. For example, in a feed block method, the (B) layer is laminated on each side the (A) layer by means of a feed block, and the resultant laminate is extruded through a T-die into a sheet, followed by cooling under passage through forming rollers, so that a desired laminate is formed. In a multi-manifold method, the (B) layer is laminated on each side the (A) layer in a multi-manifold die, and the resultant laminate is extruded into a sheet, followed by cooling under compression and passage through forming rollers, so that a desired laminate is formed.
No particular limitation is imposed on the forming rollers. Examples of the cooling method include a method for cooling under compression by means of a plurality of metal rollers, and a method for cooling under compression by means of metal rollers and nonmetal rollers or metal belts.

The synthetic resin laminate of the present invention preferably has a thickness of 0.1 to 10.0 mm. When the thickness is 0.1 mm or more, no transfer failure via through-bank or precision failure occurs, whereas when the thickness is 10.0 mm or less, no precision failure or appearance failure, which would otherwise be caused by unevenness in cooling or the like, occurs. Thus, the thickness is more preferably 0.3 to 5.0 mm, still more preferably 0.3 to 3.0 mm.

In the synthetic resin laminate of the present invention, the thermoplastic resin (B) layer (single layer) preferably has a thickness 25% or less the total thickness of the synthetic resin laminate, preferably 10 to 500 µm. When the thickness of the thermoplastic resin (B) layer (single layer) is 25% or less the total thickness of the synthetic resin laminate, no warpage due to variation in humidity occurs, whereas when the thickness is 10 µm or more, the scratch resistance and weather resistance of the resin laminate are satisfactory. When the thickness is 500 µm or less, no warpage due to variation in humidity occurs. The thickness is more preferably 15 to 150 µm.

The synthetic resin laminate of the present invention may be subjected to a hard coating treatment on one side or both sides. For example, the hard coat layer is formed by curing a photosensitive hard coating material by light energy. Examples of the photosensitive hard coating material cured by light energy include a photocurable resin composition containing a resin composition containing a mono-functional and/or poly-functional acrylate monomer and/or oligomer with a photopolymerization initiator. A specific example of the photocurable resin composition contains 100 parts by weight of a resin composition containing tris(acroxyethyl) isocyanurate (b1) in an amount of 40 to 80 wt.% and a bifunctional and/or tri-functional (meth)acrylate compound (b2), which is copolymerizable with (b1), in an amount of 20 to 40 wt.%, and 1 to 10 parts by weight of a photopolymerization initiator (b3).

No particular limitation is imposed on the method of applying a hard coating material in the present invention, and any known method may be employed. Examples of the application method include brush coating, gravure roller coating, dipping, flow coating, spraying, ink-jet, and a method disclosed in Japanese Patent No. 4161182.

The synthetic resin laminate of the present invention may be subjected, on one side or both sides, to one or more treatments of an anti-reflection treatment, an anti-fouling treatment, an anti-static treatment, a weather-resistant treatment, and an anti-glare treatment. No particular limitation is imposed on the procedure of the anti-reflection treatment, anti-fouling treatment, anti-static treatment, weather-resistant treatment, and anti-glare treatment, any known procedure may be carried out. Examples of the procedure of the treatment include applying a reflection-reducing coating, vapor-depositing dielectric thin film, and applying an anti-static coating.

The synthetic resin laminate of the present invention preferably has a total light transmittance of 85% or higher, more preferably 88% or higher, still more preferably 90% or higher.

### Examples

The present invention will next be described in detail by way of examples, which should not be construed as limiting the invention thereto.
The synthetic resin laminates produced in the Examples and Comparative Examples were evaluated through the following procedure.

### <Evaluation of transparency>

The total light transmittance (JIS K 7105) of each of the synthetic resin laminates and synthetic resin plates which had received hard coating treatment and which had been produced in the following Examples and Comparative Examples was determined by means of a differential colorimeter (COH-400, product of Nippon Denshoku Industries Co., Ltd.). A specimen which exhibited a total light transmittance of 85% or higher was evaluated as "good."

### <Evaluation of scratch resistance>

The scratch resistance of each of the synthetic resin laminates and synthetic resin plates which had received hard coating treatment and which had been produced in the following Examples and Comparative Examples was determined in accordance with JIS K 5600-5-4. Specifically, a pencil was pressed against the hard coat layer surface of the specimen at a press angle of 45° and a press load of 750 g. A plurality of pencils having different hardness indices were applied. The highest hardness of the pencil which gave no scratch was employed as an index of scratch resistance. A specimen having a scratch resistance based on a pencil hardness 3H or higher was evaluated as "good."

### <Evaluation of interlayer adhesion>

Ten test pieces each having a width of 10 cm and a length of 30 cm were cut from each of the synthetic resin laminates which had received hard coating treatment and which had been produced in the following Examples and Comparative Examples. Each test piece was forcedly attached to a cylinder having a diameter of 80 mm such that the longitudinal direction of the test piece corresponded to the circumferential direction of the cylinder, and peeling at an interface was checked. In the case where interlayer peeling occurred in less than 3 pieces, the case was evaluated as "good," whereas in the case where interlayer peeling occurred in 3 or more pieces, the specimen was evaluated as "poor."

### <Evaluation of adhesion to hard coat layer>

The adhesion of each of the synthetic resin laminates and synthetic resin plates which had received hard coating treatment and which had been produced in the following Examples and Comparative Examples was determined in accordance with JIS K 5600-5-6. Specifically, each specimen was cut in a depth direction such that the cut penetrated through the hard coat layer to the synthetic resin laminate or plate. The specimen was subjected to a peeling test, whereby adhesion to the hard coat layer was evaluated. In the case where no peeling was observed, the specimen was evaluated as "good."

### <Evaluated of weather resistance>

Each of the synthetic resin laminates and synthetic resin plates which had received hard coating treatment and which had been produced in the following Examples and Comparative Examples was subjected to a weather test by means of a QUV tester (ATLAS-UVCON, product of Toyo Seiki Co., Ltd.). Specifically, the hard coat layer was irradiated at 50°C with light from a light source of UVA-340 at a radiation dose of 25 W/m² for 4 hours, and then maintained at 60°C for 4 hours under high-humidity conditions. This cycle was repeated to attain a test period of 360 hours. After the weather test, each specimen was cut in a depth direction such that the cut penetrated through the hard coat layer to the synthetic resin laminate or plate. The specimen was subjected to a peeling test in accordance with JIS K 5600-5-6, whereby adhesion to the hard coat layer after the weather test was evaluated. In the case where no peeling was observed, the specimen was evaluated as "good."

### <Evaluation of anti-warpage property>

Test pieces each having a length of 20 cm and a width of 20 cm were cut from each of the synthetic resin laminates and the synthetic resin plates which had received hard coating treatment and which had been produced in the following Examples and Comparative Examples. The test pieces were conditioned at 23°C and an RH of 50%. Subsequently, each test piece having a thickness of 1.5 mm was immersed in water for 24 hours such that only a portion having a thickness of 0.3 mm from the top of the hard coat layer was immersed in water. Before and after immersion in water, the test piece was placed on a flat plane such that the protruded face was in contact with the flat plane. The distance between the flat plane and the height of each of the four corners of the test piece was measured. When the variation in the sum of the distances was less than 5.0 mm, the specimen was evaluated as "good."

### <Total evaluation>

A specimen which was evaluated as "good" in all of the aforementioned transparency, scratch resistance, interlayer adhesion, adhesion to hard coat layer, weather resistance, and anti-warpage property was totally evaluated as "good." When a specimen was evaluated as "poor" in terms of any one of the above properties, the specimen was totally evaluated as "poor."

### Synthesis Example 1 [Production of photosensitive hard coating material (C)]

To a mixing layer equipped with agitation paddles, a composition containing 60 parts of tris(2-acroxyethyl) isocyanurate (product of Aldrich), 40 parts of neopentyl glycol oligoacrylate (trade name: Viscoat #215D, product of Osaka Organic Chemical Industry Ltd.), 2.8 parts of 2,4,6-trimethylbenzoyldiphenylphosphine oxide (trade name: DAROCUR TPO, product of Ciba Japan), and 1 part of benzophenone (product of Aldrich) was fed. The composition was stirred for one hour at a constant temperature of 40°C, to thereby yield a photosensitive hard coating material (C).

### Example 1

By means of a multilayer extrusion apparatus having a single screw extruder having a shaft diameter of 32 mm, a single screw extruder having a shaft diameter of 65 mm, a feed block coupled to all the extruders, and a T-die coupled to the feed block, a synthetic resin laminate plate was produced. Specifically, a methyl methacrylate-styrene (78 : 22) copolymer resin [trade name: Estyrene MS750, product of Nippon Steel Chemical Co., Ltd.] (resin B1) was continuously fed to the single screw extruder having a shaft diameter of 32 mm and extruded under at a cylinder temperature of 250°C and a discharge rate of 8 kg/h. Separately, a methyl methacrylate-styrene (20 : 80) copolymer resin [trade name: Estyrene MS200, product of Nippon Steel Chemical Co., Ltd.] (resin A1) was continuously fed to the single screw extruder having a shaft diameter of 65 mm and extruded under at a cylinder temperature of 260°C and a discharge rate of 50 kg/h. The feed block coupled to all the extruders was equipped with distributing pins of two types and three layers, and the layer (B1) was laminated at 260°C on each side of the layer (A1). The resultant work was extruded into a sheet through a T-die at 270°C, which was coupled to the end of the feed block. The sheet was cooled while the sheet was finished by means of three mirrored rollers, whereby a synthetic resin laminate of resin B1-resin A1-resin B1 was produced. In this case, the rollers were maintained at 80°C, 80°C, and 90°C in the order from the upstream side. The thickness of the resultant synthetic resin laminate was 1.5 mm, and the thickness (single side) of the resin B1 layer was 90 µm near the center.
Then, the photosensitive hard coating material (C) produced in Synthesis Example 1 was applied by means of a bar coater onto the resin B1 layer of the thus-produced synthetic resin laminate so that the coating thickness after curing was adjusted to 3 to 8 µm. The coating was covered with PET film with pressure and irradiated with UV rays for curing. Irradiation was performed by means of a conveyer equipped with a high-pressure mercury lamp providing a light source distance of 12 cm and an output power of 80 W/cm² at a line speed of 1.5 m/min. After photo-curing, the PET film was removed, to thereby yield a synthetic resin laminate having a hard coat layer; i.e., a laminate which had been subjected to a hard coating treatment. Table 1 show the evaluations. As is clear from Table 1, all of the transparency, scratch resistance, interlayer adhesion, adhesion to hard coat layer, weather resistance, and anti-warpage property were good, and the total evaluation of the laminate was good.

### Example 2

The procedure of Example 1 was repeated, except that an acrylonitrile-styrene (20 : 80) copolymer resin [trade name: Stylac AST8701, product of Asahi Kasei Chemicals Corporation] (resin A2) was used instead of resin A1 used in Example 1, to thereby yield a synthetic resin laminate of resin B1-resin A2-resin B1 and a synthetic resin laminate having a hard coat layer on the resin B1 layer; i.e., a laminate which had been subjected to a hard coating treatment. The thickness of the resultant synthetic resin laminate was 1.5 mm, and the thickness (single side) of the resin B1 layer was 90 µm near the center. Table 1 show the evaluations. As is clear from Table 1, all of the transparency, scratch resistance, interlayer adhesion, adhesion to hard coat layer, weather resistance, and anti-warpage property were good, and the total evaluation of the laminate was good.

### Example 3

The procedure of Example 1 was repeated, except that a methyl methacrylate-styrene (30 : 70) copolymer resin [trade name: Estyrene MS300, product of Nippon Steel Chemical Co., Ltd.] (resin A3) was used instead of resin A1 used in Example 1, to thereby yield a synthetic resin laminate of resin B1-resin A3-resin B1 and a synthetic resin laminate having a hard coat layer on the resin B1 layer; i.e., a laminate which had been subjected to a hard coating treatment. The thickness of the resultant synthetic resin laminate was 1.5 mm, and the thickness (single side) of the resin B1 layer was 90 µm near the center. Table 1 show the evaluations. As is clear from Table 1, all of the transparency, scratch resistance, interlayer adhesion, adhesion to hard coat layer, weather resistance, and anti-warpage property were good, and the total evaluation of the laminate was good.

### Example 4

The procedure of Example 1 was repeated, except that a methyl methacrylate-styrene (80 : 20) copolymer resin [trade name: Acrystar KT-80SG, product of Denki Kagaku Kogyo K.K.] (resin B2) was used instead of resin B1 used in Example 1, to thereby yield a synthetic resin laminate of resin B2-resin A1-resin B2 and a synthetic resin laminate having a hard coat layer on the resin B2 layer; i.e., a laminate which had been subjected to a hard coating treatment. The thickness of the resultant synthetic resin laminate was 1.5 mm, and the thickness (single side) of the resin B2 layer was 90 µm near the center. Table 1 show the evaluations. As is clear from Table 1, all of the transparency, scratch resistance, interlayer adhesion, adhesion to hard coat layer, weather resistance, and anti-warpage property were good, and the total evaluation of the laminate was good.

### Example 5

The procedure of Example 1 was repeated, except that a methyl methacrylate-styrene (74 : 26) copolymer resin [trade name: Estyrene MS750LF, product of Nippon Steel Chemical Co., Ltd.] (resin B3) was used instead of resin B1 used in Example 1, to thereby yield a synthetic resin laminate of resin B3-resin A1-resin B3 and a synthetic resin laminate having a hard coat layer on the resin B3 layer; i.e., a laminate which had been subjected to a hard coating treatment. The thickness of the resultant synthetic resin laminate was 1.5 mm, and the thickness (single side) of the resin B3 layer was 90 µm near the center. Table 1 show the evaluations. As is clear from Table 1, all of the transparency, scratch resistance, interlayer adhesion, adhesion to hard coat layer, weather resistance, and anti-warpage property were good, and the total evaluation of the laminate was good.

### Comparative Example 1

The procedure of Example 1 was repeated, except that a methyl methacrylate-styrene (60 : 40) copolymer resin [trade name: Estyrene MS600, product of Nippon Steel Chemical Co., Ltd.] (resin D1) was used instead of resin A1 used in Example 1, to thereby yield a synthetic resin laminate of resin B1-resin D1-resin B1 and a synthetic resin laminate having a hard coat layer on the resin B1 layer; i.e., a laminate which had been subjected to a hard coating treatment. The thickness of the resultant synthetic resin laminate was 1.5 mm, and the thickness (single side) of the resin B1 layer was 90 µm near the center. Table 1 show the evaluations. As is clear from Table 1, all of the transparency, scratch resistance, interlayer adhesion, adhesion to hard coat layer, and weather resistance were good, but anti-warpage property was poor. Thus, the total evaluation of the laminate was poor.

### Comparative Example 2

The procedure of Example 1 was repeated, except that resin D1 was used instead of resin A1 used in Example 1, and a methyl methacrylate-styrene (90 : 10) copolymer resin [trade name: Acrystar KT-80D, product of Denki Kagaku Kogyo K.K.] (resin D2) was used instead of resin B1, to thereby yield a synthetic resin laminate of resin D2-resin D1-resin D2 and a synthetic resin laminate having a hard coat layer on the resin D2 layer; i.e., a laminate which had been subjected to a hard coating treatment. The thickness of the resultant synthetic resin laminate was 1.5 mm, and the thickness (single side) of the resin D2 layer was 90 µm near the center. Table 1 show the evaluations. As is clear from Table 1, all of the transparency, scratch resistance, interlayer adhesion, adhesion to hard coat layer, and weather resistance were good, but anti-warpage property was poor. Thus, the total evaluation of the laminate was poor.

### Comparative Example 3

The procedure of Example 1 was repeated, except that resin D1 was used instead of resin B1 used in Example 1, to thereby yield a synthetic resin laminate of resin D1-resin A1-resin D1 and a synthetic resin laminate having a hard coat layer on the resin D1 layer; i.e., a laminate which had been subjected to a hard coating treatment. The thickness of the resultant synthetic resin laminate was 1.5 mm, and the thickness (single side) of the resin D1 layer was 90 µm near the center. Table 1 show the evaluations. As is clear from Table 1, all of the transparency, interlayer adhesion, and anti-warpage property were good, but scratch resistance, adhesion to hard coat layer, and weather resistance were poor. Thus, the total evaluation of the laminate was poor.

### Comparative Example 4

The procedure of Example 1 was repeated, except that resin D2 was used instead of resin B1 used in Example 1, to thereby yield a synthetic resin laminate of resin D2-resin A1-resin D2 and a synthetic resin laminate having a hard coat layer on the resin D2 layer; i.e., a laminate which had been subjected to a hard coating treatment. The thickness of the resultant synthetic resin laminate was 1.5 mm, and the thickness (single side) of the resin D2 layer was 90 µm near the center. Table 1 show the evaluations. As is clear from Table 1, all of the transparency, scratch resistance, adhesion to hard coat layer, and weather resistance were good, but interlayer adhesion and anti-warpage property were poor. Thus, the total evaluation of the laminate was poor.

### Comparative Example 5

The procedure of Example 1 was repeated, except that a methacrylic resin (trade name: Delpet 80NE, product of Asahi Kasei Chemicals Corporation) (resin D3) was used instead of resin B1 used in Example 1, to thereby yield a synthetic resin laminate of resin D3-resin A1-resin D3 and a synthetic resin laminate having a hard coat layer on the resin D3 layer; i.e., a laminate which had been subjected to a hard coating treatment. The thickness of the resultant synthetic resin laminate was 1.5 mm, and the thickness (single side) of the resin D3 layer was 90 µm near the center. Table 1 show the evaluations. As is clear from Table 1, all of the transparency, scratch resistance, adhesion to hard coat layer, and weather resistance were good, but interlayer adhesion and anti-warpage property were poor. Thus, the total evaluation of the laminate was poor.

### Comparative Example 6

By means of a multilayer extrusion apparatus having a single screw extruder having a shaft diameter of 32 mm, a single screw extruder having a shaft diameter of 65 mm, a feed block coupled to all the extruders, and a T-die coupled to the feed block, a synthetic resin laminate plate was produced. Specifically, resin B1 was continuously fed to the single screw extruder having a shaft diameter of 32 mm and extruded under at a cylinder temperature of 250°C and a discharge rate of 4 kg/h. Separately, resin A1 was continuously fed to the single screw extruder having a shaft diameter of 65 mm and extruded under at a cylinder temperature of 260°C and a discharge rate of 50 kg/h. The feed block coupled to all the extruders was equipped with distributing pins of two types and two layers, and the layer (B1) was laminated at 260°C on one side of the layer (A1). The resultant work was extruded into a sheet through a T-die at 270°C, which was coupled to the end of the single screw extruder. The sheet was cooled while the sheet was finished by means of three mirrored rollers, whereby a synthetic resin laminate of resin A1-resin B1 was produced. In this case, the rollers were maintained at 80°C, 80°C, and 90°C in the order from the upstream side. The thickness of the resultant synthetic resin laminate was 1.5 mm, and the thickness of the resin B1 layer was 90 µm near the center.
Then, the photosensitive hard coating material (C) produced in Synthesis Example 1 was applied by means of a bar coater onto the resin B1 layer of the thus-produced synthetic resin laminate so that the coating thickness after curing was adjusted to 3 to 8 µm. The coating was covered with PET film with pressure and irradiated with UV rays for curing. Irradiation was performed by means of a conveyer equipped with a high-pressure mercury lamp providing a light source distance of 12 cm and an output power of 80 W/cm² at a line speed of 1.5 m/min. After photo-curing, the PET film was removed, to thereby yield a synthetic resin laminate having a hard coat layer; i.e., a laminate which had been subjected to a hard coating treatment. Table 1 show the evaluations. As is clear from Table 1, all of the transparency, scratch resistance, interlayer adhesion, adhesion to hard coat layer, and weather resistance were good, but anti-warpage property was poor. Thus, the total evaluation of the laminate was poor.

### Comparative Example 7

By means of a single-layer extrusion apparatus having a single screw extruder having a shaft diameter of 65 mm and a T-die, a synthetic resin plate was produced. Specifically, resin B1 was continuously fed to the single screw extruder having a shaft diameter of 65 mm and extruded at a cylinder temperature of 260°C and a discharge rate of 50 kg/h. The resultant work was extruded into a sheet through a T-die at 270°C, which was coupled to the end of the single screw extruder. The sheet was cooled while the sheet was finished by means of three mirrored rollers, whereby a synthetic resin plate of resin B1 was produced. In this case, the rollers were maintained at 80°C, 80°C, and 90°C in the order from the upstream side. The thickness of the resultant synthetic resin plate was 1.5 mm.
Then, the photosensitive hard coating material (C) produced in Synthesis Example 4 was applied by means of a bar coater onto the resin B1 layer of the thus-produced synthetic resin plate so that the coating thickness after curing was adjusted to 3 to 8 µm. The coating was covered with PET film with pressure and irradiated with UV rays for curing. Irradiation was performed by means of a conveyer equipped with a high-pressure mercury lamp providing a light source distance of 12 cm and an output power of 80 W/cm² at a line speed of 1.5 m/min. After photo-curing, the PET film was removed, to thereby yield a synthetic resin plate having a hard coat layer; i.e., a resin plate which had been subjected to a hard coating treatment. Table 1 show the evaluations. As is clear from Table 1, all of the transparency, scratch resistance, interlayer adhesion, adhesion to hard coat layer, and weather resistance were good, but anti-warpage property was poor. Thus, the total evaluation of the laminate was poor.

### Comparative Example 8

The procedure of Comparative Example 7 was repeated, except that resin A1 was used instead of resin B1 used in Comparative Example 7, to thereby yield a synthetic resin plate of resin A1 and a synthetic resin plate having a hard coat layer on the resin A1 layer; i.e., a resin plate which had been subjected to a hard coating treatment. The thickness of the resultant synthetic resin plate was 1.5 mm. Table 1 shows the evaluations. As clear from Table 1, all of the transparency and anti-warpage property were good, but scratch resistance, adhesion to hard coat layer, and weather resistance were poor. Thus, the total evaluation of the laminate was poor.

### Comparative Example 9

The procedure of Comparative Example 7 was repeated, except that resin A2 was used instead of resin B1 used in Comparative Example 7, to thereby yield a synthetic resin plate of resin A2 and a synthetic resin plate having a hard coat layer on the resin A2 layer; i.e., a resin plate which had been subjected to a hard coating treatment. The thickness of the resultant synthetic resin plate was 1.5 mm. Table 1 shows the evaluations. As is clear from Table 1, all of the transparency, adhesion to hard coat layer, and anti-warpage property were good, but scratch resistance and weather resistance were poor. Thus, the total evaluation of the laminate was poor.

**[Table 1]**

| | Layer configuration (resin) | Transparency | Scratch resistance | Interlayer adhesion | Adhesion to hard coaklayer | Weather resistance | Anti-warpage | Total evaluation |
|---|---|---|---|---|---|---|---|---|
| | | Total light transmittance | Pencil hardness | Peeling | State after test | State after test | Variation amount | |
| Ex. 1 | B1/A1/B1 | 92.0% - ○ | 3H - ○ | 0 - ○ | No peelinq - ○ | No peeling - ○ | 2.4 mm - ○ | ○ |
| Ex. 2 | B1/A2/B1 | 90.7% - ○ | 3H - ○ | 0 - ○ | No peeling - ○ | No peeling - ○ | 2.6 mm - ○ | ○ |
| Ex. 3 | B1/A3/B1 | 92.1% - ○ | 3H - ○ | 0 - ○ | No peelinq - ○ | No peeling - ○ | 3.1 mm - ○ | ○ |
| Ex. 4 | B2/A1/B2 | 92.3% - ○ | 3H - ○ | 0 - ○ | No peeling - ○ | No peeling - ○ | 3.3 mm - ○ | ○ |
| Ex. 5 | B3/A1/B3 | 92.2% - ○ | 3H - ○ | 0 - ○ | No peeling - ○ | No peeling - ○ | 2.3 mm - ○ | ○ |
| Comp. Ex. 1 | B1/D1/B1 | 92.0% - ○ | 3H - ○ | 0 - ○ | No peeling - ○ | No peeling - ○ | 8.2 mm - × | × |
| Comp. Ex. 2 | D2/D1/D2 | 92.1% - ○ | 4H - ○ | 0 - ○ | No peeling - ○ | No peeling - ○ | 13.4 mm - × | × |
| Comp. Ex. 3 | D1/A1/D1 | 91.3% - ○ | 2H - × | 0 - ○ | Partial peel - × | Complete peel - × | 2.4 mm - ○ | × |
| Comp. Ex. 4 | D2/A1/D2 | 92.8% - ○ | 4H - ○ | 7 - × | No peeling - ○ | No peeling - ○ | 6.1mm - × | × |
| Comp. Ex. 5 | D3/A1/D3 | 92.9% - ○ | 4H - ○ | 10 - × | No peeling - ○ | No peeling - ○ | 10.6 mm - × | × |
| Comp. Ex. 6 | B1/A1 | 92.4% - ○ | 4H - ○ | 0 - ○ | No peeling - ○ | No peelinq - ○ | 5.5 mm - × | × |
| Comp. Ex. 7 | B1 | 91.0% - ○ | 3H - ○ | - | No peeling - ○ | No peeling - ○ | 2.9 mm - × | × |
| Comp. Ex. 8 | A1 | 87.5% - ○ | H - × | - | Complete peel - × | Complete peel - × | 1.8 mm - ○ | × |
| Comp. Ex. 9 | A2 | 91.0% - ○ | H - × | - | No peeling - ○ | Partial peel - × | 2.1 mm - ○ | × |

| | | | | | | | | |
|---|---|---|---|---|---|---|---|---|
| Note: O - Good, X - Poor | | | | | | | | |

### Industrial Applicability

The synthetic resin laminate of the present invention is excellent in transparency, anti-warpage property, interlayer adhesion, adhesion to a hard coat layer formed from a photosensitive hard coating material, scratch resistance, and weather resistance, and is used as a material for transparent substrate, a transparency protective material, etc., particularly as a front panel of a display device.

## Claims

1. A synthetic resin laminate comprising a thermoplastic resin (A) layer, and a thermoplastic resin (B) layer provided on each side of the thermoplastic resin (A) layer, the thermoplastic resin (A) having a styrene structural unit content of 65 to 90 mol% with respect to all the structural units forming the resin, **characterized in that** the thermoplastic resin (B) is a (meth)acrylic acid ester-styrene copolymer resin which is predominantly formed of a (meth)acrylic acid ester structural unit (a) represented by formula (1):
[F1] 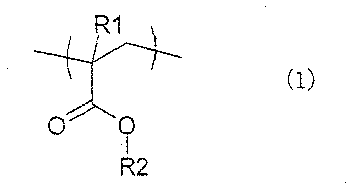 (wherein R1 represents a hydrogen atom or a methyl group, and R2 represents a C1 to C18 alkyl group) and a styrene structural unit, and which has a ratio by mole of (meth)acrylic acid ester structural unit (a) to styrene structural unit of 70 : 30 to 84 : 16.

2. A synthetic resin laminate according to claim 1, wherein the thermoplastic resin (A) has a styrene structural unit content of 70 to 80 mol%.

3. A synthetic resin laminate according to claim 1, wherein the thermoplastic resin (B) has a ratio by mole of (meth)acrylic acid ester structural unit (a) to styrene structural unit of 74 : 26 to 80 : 20.

4. A synthetic resin laminate according to claim 1, wherein the thermoplastic resin (A) is a methyl methacrylate-styrene copolymer resin or an acrylonitrile-styrene copolymer resin.

5. A synthetic resin laminate according to claim 1, wherein the thermoplastic resin (A) is a methyl methacrylate-styrene copolymer resin having a ratio by mole of methyl methacrylate structural unit to styrene structural unit of 10 : 90 to 35 : 65.

6. A synthetic resin laminate according to claim 1, wherein the thermoplastic resin (A) is an acrylonitrile-styrene copolymer resin having a ratio by mole of acrylonitrile structural unit to styrene structural unit of 10 : 90 to 35 : 65.

7. A synthetic resin laminate according to any of claims 1 to 6, wherein one or both sides have been subjected to a hard coating treatment.

8. A synthetic resin laminate according to any of claims 1 to 6, wherein one or both sides have been subjected to one or more treatments selected from among an anti-reflection treatment, an anti-fouling treatment, an anti-static treatment, a weather-resistant treatment, and an anti-glare treatment.

9. A material for transparent substrate comprising a synthetic resin laminate as recited in any of claims 1 to 6.

10. A transparent protective material comprising a synthetic resin laminate as recited in any of claims 1 to 6.
